# EUROPEAN PATENT SPECIFICATION

(11) **EP 1 706 360 B1**
(45) Date of publication and mention of the grant of the patent: **22.01.2014**
(21) Application number: 04706742.6
(22) Date of filing: 30.01.2004
(51) Int. Cl.: C03C 1/00, C03C 17/00, C04B 41/49, C09D 5/16, C04B 111/00

(54) **COMPOSITION FOR USE NOx REMOVING TRANSLUCENT COATING**
ZUSAMMENSETZUNG FÜR EINE LICHTDURCHLÄSSIGE, NOX -ENTFERNENDE SCHICHT
COMPOSITION POUR UN REVETEMENT TRANSLUCIDE A SUPPRESSION DE NOx

(43) Date of publication of application: 04.10.2006
(73) Proprietor: Millennium Inorganic Chemicals UK Holdings Limited, Grimsby North East Lincolnshire DN40 2PR (GB)
(72) Inventor: GOODWIN, Graham, N.E. Lincolnshire DN35 7PT (GB); STRATTON, John, N.E. Lincolnshire DN35 ONE (GB); MCINTYRE, Robert, Louth LN11 9XZ (GB)
(74) Representative: Leszczynski, André
(86) International application number: PCT/IB2004/000226
(87) International publication number: WO 2005/082810

(56) References cited:
- EP-A- 0 923 988
- EP-A- 1 118 385
- US-A- 5 658 841
- PATENT ABSTRACTS OF JAPAN vol. 1998, no. 13, 30 November 1998 (1998-11-30) & JP 10 212809 A (TOTO LTD), 11 August 1998 (1998-08-11)
- DATABASE CHEMABS [Online] CHEMICAL ABSTRACTS SERVICE, COLUMBUS, OHIO, US; KE, YUZHANG ET AL: "Preparation of titania coating on ceramic surface for anti-fouling, deodorization, and sterilization" XP002290422 retrieved from STN Database accession no. 2001:757934
- PATENT ABSTRACTS OF JAPAN vol. 1998, no. 12, 31 October 1998 (1998-10-31) & JP 10 180118 A (SUMITOMO METAL IND LTD), 7 July 1998 (1998-07-07)

## Description

The present invention relates to compositions having photocatalytic self-cleaning properties for use as translucent coating on construction material surfaces.

In the field of buildings and coatings, the pollution of the environment raises a serious problem of contamination of exterior materials for buildings and outdoor buildings. Dust and particles floating in the air deposit on the roof and the outer wall of buildings in fine weather. Upon exposure to rainfall, the deposits flow together with rainwater and flow down along the outer wall of the building. As a result, the contaminant adheres along the course of the rainwater. As the surface dries, soil appears in a stripe pattern.

To solve at least in part this problem, it has already been proposed to deposit a coating on construction material surfaces. Alternatively, said coating furthermore exhibits photocatalytic self-cleaning properties towards atmospheric contaminants. Thus, titanium oxide photocatalytic coatings are disclosed in EP 0 901 991, WO 97/07069, WO 97/10186 and WO 98/41480.

More specifically, titanium dioxide (TiO₂) which is a semiconductor, converts UV radiation (for example from UV light) into electrons and holes which can ultimately initiate the degradation of harmful organic compounds into harmless substances. Typical atmospheric contaminants are for example, nitrogen oxides, ozone and organic pollutants adsorbed on the coated surface of the materials. This is particularly advantageous in built-up areas, for example, in city streets, where the concentration of organic contaminants may be relatively high, especially in intense sunlight, but where the available surface area of materials is also relatively high.

However, one problem associated with so-formed oxidized species, like HNO₃ formed from the reaction of NO₂ and NO with TiO₂/UV light in the presence of water and oxygen, is their absorption on the coated surface of the material which they may cause problems of stains and/or corrosion.

Accordingly, there is still a need for a coating having a significant improvement in decontamination properties, non staining ability and outstanding durability over prior coatings.

Surprisingly, the inventors have discovered that such a purpose could be efficiently achieved by a specific composition for use as a coating.

Accordingly, an object of the present invention is to provide a composition which, when applied as a coating on a surface of a material, exhibits improved NOₓ and optionally VOCₓ (i.e. Volatile Organic Content like xylene and benzene) removing properties.

Another object of the present invention is to provide a composition which can impart such properties without sacrificing the translucency of the coating.

Still another object of the present invention is to provide a composition which, when applied as a coating on the surface of a material, can easily release the contaminant therefrom in particular by rainfall or by washing with water. Specifically, the composition, when applied to the surface of a substrate to form a film, enables a contaminant or derivative thereof adhered onto the surface to be easily washed away by water.

According to one aspect, the instant invention is directed to a NOₓ removing composition for use as a translucent coating on construction material surfaces, comprising at least:
a) photocatalytic titanium dioxide particles having at least a de-NOₓ activity,
b) particles having a de-HNO₃ activity, and
c) a silicon based-material, in which are dispersed said particles,
   wherein said photocatalytic particles have a crystalline size ranging from 1 to 50 nm and particles a) and b) are present in an amount lower than 20% by weight of the total weight of said composition.

According to another aspect, the instant invention relates to a method for preparing a surface of a material with imparting self-cleaning properties towards atmospheric contaminants said method comprising at least the steps of:
- applying a composition according to the invention onto the surface of a material, and
- drying or curing the said composition to provide a translucent coating system.

### Photocatalytic titanium dioxide particles:

The composition according to the present invention comprises at least dispersed photocatalytic titanium dioxide particles having at least a de-NOₓ activity with NOₓ meaning NO and/or NO₂. According to a specific embodiment, said photocatalytic particles also exhibit a de-VOC activity.

In the present invention, the term "de-NOₓ and/or de-VOC" activity as used herein refers to an ability to transform NOₓ and/or VOC species to their respective oxidized species like HNO₃ for NOₓ.

Specifically, in the present invention, the term "photocatalytic particles" used herein refers to particles based on a material which, when exposed to light (excitation light) having higher energy (i.e., shorter wavelength) than the energy gap between the conduction band and the valence band of the crystal, can cause excitation (photoexcitation) of electrons in the valence band to produce a conduction electron and a valence hole.

The photocatalytic titanium dioxide particles contained in the composition according to the present invention basically include anatase and rutile forms of titanium oxide and mixtures thereof although anatase-type titanium oxide is especially preferred for its high photoactivity.

For the titanium dioxide particles of the coating, the nature of the particle is, preferably, predominantly the anatase crystalline form. "Predominantly" means that the level of anatase in the titanium dioxide particles of the coating composition is greater than 50% by mass. The particles of the coating composition preferably exhibit a level of anatase of greater than 80%.

The degree of crystallization and the nature of the crystalline phase are measured by X-ray diffraction.

The crystalline titanium dioxide particles incorporated in the coating exhibit a mean size ranging from 1 to 150 nm, preferably ranging from 2 to 30 nm, more preferably still from 5 to 20 nm. The diameters are measured by transmission electron microscopy (TEM) and also XRD.

The preferred photocatalyst particles have a high surface area per gram, e.g., higher than 30 m²/g, preferably above 50 m²/g and most preferably greater than about 100 m²/g as measured by the BET method.

In contrast, the surface area per gram of conventional TiO₂ pigments i.e. having photocatalytic properties is about 1-30 m²/g. The difference in the much smaller particles and crystallites of the photocatalyst particles, gives rise to a much higher surface area.

Particularly convenient for the invention, are the photocatalytic TiO₂ sold sold under the name S5-300B by Millennium Inorganic Chemicals Ltd.

The particles having a photocatalytic activity are added in an amount of 0.1 to 15, preferably 1 to 12, and most preferably 2 to 10, by weight (expressed in dry matter) of the total weight of said composition.

In particular, the composition according to the invention includes at least 5% by weight of photocatalytic particles.

According to a specific embodiment, photocatalytic particles may also exhibit a de-VOC removing property.

The photocatalytic titanium dioxide particles may be used as a sol prepared by dispersion in water, as a water- or solvent-containing paste, or as a powder. Preferred examples of the dispersant used to prepare a sol include water, alcohols such as methanol, ethanol, isopropanol, n-butanol and isobutanol, and ketones such as methyl ethyl ketone and methyl isobutyl ketone.

### De-HNO₃ particles:

The composition according to the present invention comprises dispersed particles for removing the oxidized species HNO₃, formed photocatalytically from NOₓ particles. These second type of particles are called "HNO₃ removing particles" or de-HNO₃ particles.

Illustrative examples of de-HNO₃ particles include basic compounds, in particular any insoluble carbonates and for example calcium carbonate, zinc carbonate, magnesium carbonate and mixtures thereof. Especially, preferred examples of such compounds include calcium carbonate. No particular limitation is imposed on its amount which should be sufficient to achieve the transformation of HNO₃ to its alkaline salt and, secondary, compatible with the coating including it. An amount of 0.05 to 15, in particular of 0.1 to 2, by weight (expressed in dry matter) of the total weight of said composition may be particularly convenient.

The ratio de-HNO₃ particles/photocatalytic particles may vary from 0.05 to 2, in particular from 0.1 to 1 and more particularly from 0.2 to 0.8.

Said particles i.e. de-HNO₃ particles and photocatalytic particles are included in the composition according to the invention in an amount lower than 20% by weight (expressed in dry matter), in particular lower than 15% by weight, and more particularly lower than 12% by weight of the total weight of the composition.

### Silicon-based component:

The composition of the present invention contains a silicon-based component wherein at least previously disclosed particles are entrapped.

Specifically, in the present invention, the term "silicon-based material" used herein refers to any material based on silica or mixture thereof, which is able to provide a silicon based-film convenient for coating.

The silicon based-material advantageously provides a polysiloxane polymer film.

According to one embodiment, the silicon based-material includes at least one polysiloxane derivative and in particular having the formula 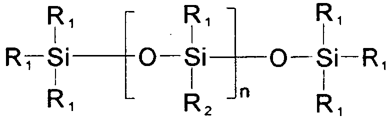 wherein
- n has a value to provide an aqueous dispersion of polysiloxane having weight percentage solid ranging from 40 - 70%, and
- R₁ and R₂ are alkyl radicals of 1 to 20 carbon atoms or an aryl group such as phenyl.

Typically, the value of n ranges from about 50 to 2000.

Illustrative R₁ and R₂ radicals are alkyl groups (e.g., methyl, ethyl, propyl, butyl, 2-ethylbutyl, octyl), cycloaklyl groups (e.g., cyclohexyl, cyclopentyl), alkenyl groups (e.g., vinyl, hexenyl, allyl), aryl groups (e.g., phenyl, tolyl, xylyl, naphthyl, diphenyl) aralkyl groups (e.g., benzyl, phenylethyl), any of the foregoing groups in which some or all of the hydrogens bonded to the carbons have been substituted (such as with halogen atoms or cyano), or groups substituted with or containing, for example, amino groups, ether groups (-O-), carbonyl groups (-CO-), carboxyl groups (-COOH) or sulfonyl groups (-SO₂-) (e.g., chloromethyl, trifluoropropyl, 2-cyanoethyl, 3-cyanopropyl).

Particularly convenient for the instant invention care, polysiloxanes sold under the trademark WACKER BS 45 by the firm WACKER-Chemie GmbH.

The content of the polysiloxane in the composition according to the present invention may be suitably determined.

The composition according to the present invention may include at least a solvent.

Examples of solvents usable herein include water, an organic solvent, and a mixed solvent composed of water and an organic solvent. Water, and alcohol is particularly preferred.

The composition according to the present invention may contain optional components provided that such an addition does not compromise the shelflife, UV durability, translucency or non-staining properties. Examples of such additional compounds include filler(s) like quartz, calcite, clay, talc, barite and/or Na-Al-silicate; pigments like TiO₂, lithopone, and other inorganic pigments; dispersants like polyphosphates, polyacrylates, phosphonates, naphthene and lignin sulfonates; wetting agents like anionic, cationic, amphoteric and non-ionic surfactants; defoamers like silicon emulsions, hydrocarbons, long-chain alcohols, ...; stabilizers like mostly cationic compounds; coalescents agents like alkali-stable esters, glycols, hydrocarbons; rheological additives like cellulose derivatives (CMC, HEC), xanthane gum, polyurethane, polyacrylate, modified starch, bentone and other lamellar silicates; water repellents like alkyl siliconates, siloxanes, wax emulsion, fatty acid Li salts and conventional fungicide or biocide.

The composition of the present invention may be applied onto the surface of the material by any suitable method, and examples of suitable methods include spray coating, dip coating, flow coating, spin coating, roll coating, brush coating, and sponge coating.

The composition after the application onto the surface of the substrate is then dried or cured to form a thin film. The term "dried or cured" used herein means that the silicon based-material contained in the composition according to the present invention is converted to a silicon film. Therefore, drying may be performed by either air drying or heat drying. Alternatively, ultraviolet irradiation or the like may be conducted to cause polymerization so far as the precursor is converted to a silicon film.

The composition according to the present invention may be applied on the surface of a high variety of materials.

The material is not particularly limited, and examples thereof include metals, ceramics, glasses, plastics, woods, stones, cements, concretes, fibers, woven fabrics, and combinations of the above materials and laminates of the above materials. Specific examples to which the composition may be applied include housings, building materials; exterior of the buildings; interior of the buildings; sashes; windowpanes; structural materials; exterior of machineries and articles; dustproof covers and coatings; and films, sheets and seals.

In preparing the preferred embodiments of the present invention, various alternatives may be used to facilitate the objectives of the invention.

The following examples are presented to aid in an understanding of the present invention and are not intended to, and should not be construed to limit the invention in any way. All alternatives, modifications and equivalents which may becomes obvious to those of ordinary skill in the art upon a reading of the present disclosure are included within the spirit and scope of the invention.

### Examples

Paints were prepared by using the following materials:
- TiO₂ (24% w/w): TiO₂ S5-300B from Millennium Inorganic Chemicals,
- Sodium silicate: Sodium silicate soln.Grade Crytal 79 from Ineos. 386 g/l as SiO₂ diluted to 183 g/l,
- U3 (21% w/w): Precipitated calcium carbonate from Solvay Grade U3 dispersed in water to 21% solids content,
- 1% MR: Hydroxy ethyl cellulose Natrosol MR from Hercules Incorporated 1% solution in water,
- Foamaster NXZ: Antifoam from Cognis,
- Wacker BS45: Polysiloxane polymer latex from Wacker Chemie GmbH,
- Texanol: 2, 2, 4 trimethyl-1,3 pentanediol monoisobutyrate from Eastman Chemical Company.

The paints are prepared in two parts termed A and B.

For part A, the TiO₂ sol is diluted with water to which is then added the sodium silicate, calcium carbonate followed by the hydroxyethylcellulose and antifoam.

The components are mixed under high shear.

For part B, the water is added to the polysiloxane polymer and the pH of this is then adjusted to 10.0 followed by the addition of the sodium silicate. Part A is then mixed with part B under high shear mixing. Lastly the Texanol is added.

The compositions of so-prepared paints are listed in Table I.

**Table I**

| | F₁ | F₂ | F₃ | F₄ | F₅ | F₆ | F₇ |
|---|---|---|---|---|---|---|---|
| PART A | | | | | | | |
| Ti O₂* (% wt) | 19.7 | 27.0 | 17.70 | 24.30 | 30.10 | 8.80 | 27.40 |
| CaCO₃* (%wt) | 0 | 0 | 13.60 | 12.50 | 11.60 | 27.20 | 21.30 |
| Sodium silicate (% wt) | 1 | 1.3 | 0.9 | 1.2 | 1.5 | 0.4 | 1.4 |
| Hydroxyethyl cellulose (% wt) | 1 | 1 | 1 | 1 | 1 | 1 | 1 |
| Antifoam (% w) | 0.06 | 0.06 | 0.06 | 0.06 | 0.06 | 0.06 | 0.06 |
| Water (% wt) | 9.6 | 7.5 | 6.2 | 4.5 | 3.2 | 5.1 | 1.1 |

| PART B | | | | | | | |
|---|---|---|---|---|---|---|---|
| Water (% wt) | 9.6 | 7.5 | 6.2 | 4.5 | 3.2 | 5.1 | 1.1 |
| Sodium silicate (% wt) | 1 | 1.3 | 0.9 | 1.2 | 1.5 | 0.4 | 1.4 |
| Polysiloxane (% wt) | 24.2 | 20.8 | 19.2 | 16.4 | 14.2 | 17.9 | 11.2 |
| Texanol (% w) | 1.2 | 1 | 1.0 | 0.8 | 0.7 | 0.9 | 0.6 |

| | | | | | | | |
|---|---|---|---|---|---|---|---|
| The percentages stated in the table are the percentage expressed in commercial product i.e. dry matter + solvent) | | | | | | | |

NOₓ measurements were made on paint films that were 10 cm by 1 cm prepared on a Melinex (Mylar) substrate.

The NOₓ that is used is NO at 30 ppm. After the initial measurement, the paint films were irradiated with 55 W/m² UV in the range of 300 to 400 nm range for 18 hours using a filtered Xenon light source. For the NOₓ measurements, the samples are irradiated with a UV fluorescent tube which emits 10 W/m² UV in the range of 300 to 400 nm.

The equipment, products and methods used for determining of NO/NO₂ removal by coating are as follows:

### 1. Equipment

Nitrogen Oxides Analyser SIGNAL 4000

UV Lamp Model VL-6LM 365 & 312 nanometer wavelength
- ex BDH

Air-tight sample chamber

### 3 channel gas mixer

- ex Brooks Instruments, Holland

### 2. Gases

NO Nitric Oxide
NO₂ Nitrogen Dioxide
NOₓ Mixture NO & NO₂
Compressed air containing water vapour.

### 3. Method

The method of measure is as follows:
1. Switch on Analyser and exhaust pump. Ensure exhaust pipe goes to atmosphere.
2. Allow to warm-up. Several internal components need to reach operating temperature before the analyser will begin operation. The process will, typically, take 60 mins from cold start and the message START-UP SEQUENCE ACTIVE will be displayed until operating conditions are met.
3. After warm-up turn on air and test gas supply to the gas mixer.
4. Calibrate the Analyser on the Test gas supply only, (turn the air channel to zero on the gas mixer), according to the manufacturer's instructions
5. After calibration turn OFF the test gas supply at the gas mixer.
6. Place test sample in the test chamber and seal chamber.
7. Turn on both air and test gas and adjust each until required level of test gas is reached, shown by the Analyser output. RECORD level.
8. Switch on the UV lamp when test gas levels are at desired point.
9. Allow the irradiated sample value to reach equilibrium, typically up to 5 mins.
10. RECORD the value shown on the analyser.
11. Report "Initial Value" i.e. no UV, "Final Value" after UV exposure for set period, ΔValue i.e. Initial- Final and %reduction i.e. Δ value / initial value x 100.

The results are submitted in the following table.

**Table II**

| | % NO removal |
|---|---|
| F₁ | 3.6 |
| F₂ | 4.0 |
| F₃ | 6.0 |
| F₄ | 10.9 |
| F₅ | 9.0 |
| F₆ | 4.9 |
| F₇ | 14.3 |

## Claims

1. A NOₓ removing composition for use as a translucent coating on construction material surface, comprising at least:
a) photocatalytic titanium dioxide particles having at least a de-NOₓ activity,
b) particles having a de-HNO₃ activity, and
c) a silicon based-material in which said particles are dispersed,
wherein said photocatalytic particles have a crystalline size ranging from 1 to 50 nm and particles of a) and b) being present in an amount lower than 20% by weight of the total weight of said composition.

2. The composition according to claim 1, wherein photocatalytic particles include at least anatase form of titanium oxide, rutile form of titanium oxide or a mixture thereof.

3. The composition according to anyone of claims 1 to 2, wherein the titanium dioxide particles are predominantly the anatase crystalline form.

4. The composition according to claim 3, wherein the crystalline titanium dioxide particles exhibit a mean size from 1 to 50 nm, in particular from 2 to 30 nm, more particularly from 5 to 20 nm.

5. The composition according to anyone of claims 1 to 4, wherein the photocatalytic particles have a surface area per gram higher than 30 m²/g.

6. The composition according to anyone of claims 1 to 5, wherein the photocatalytic particles are present in an amount of 0.1 to 15%, preferably 1 to 12%, and most preferably 2 to 10% by weight (expressed in dry matter) of the total weight of said composition.

7. The composition according to anyone of claims 1 to 6, wherein de-HNO₃ particles include basic compounds.

8. The composition according to claim 7, wherein de- HNO₃ particles include calcium carbonate, zinc carbonate or a mixture thereof.

9. The composition according to claim 8, wherein the de-HNO₃ particles are present in an amount of 0.05 to 15%, in particular of 0.1 to 1% by weight of the total weight of said composition.

10. The composition according to anyone of claims 1 to 9, wherein it includes photocatalytic titanium dioxide and de-HNO₃ particles in a ratio de-HNO₃ particles/titanium dioxide particles ranging from 0.05 to 1.2, in particular from 0.1 to 1, and more particularly from 0.2 to 0.8.

11. The composition according to anyone of claims 1 to 10, wherein the silicon based-material provides a polysiloxane film.

12. The composition according to anyone of claims 1 to 11, wherein the silicon based-material includes at least a polysiloxane polymer.

13. The composition according to anyone of claims 1 to 12 including furthermore a solvent.

14. A method for preparing a surface of a material with self-cleaning properties towards atmospheric contaminants, said method comprising at least the steps of:
- applying a composition according to anyone of claims 1 to 13 onto the surface of a material, and
- drying or curing the composition to obtain a translucent coating thereon.

## Patentansprüche

1. NOx-entfernende Zusammensetzung zur Verwendung als eine transparente Beschichtung auf einer Baumaterial-Oberfläche, umfassend mindestens folgendes:
a) photokatalytische Titandixoid-Teilchen mit mindestens einer NOₓ-entfernenden Aktivität,
b) Teilchen mit einer HNO₃-entfernenden Aktivität, und
c) ein Silicium-basiertes Material, in dem die Teilchen dispergiert sind,
wobei die photokatalytischen Teilchen eine Kristallgröße im Bereich von 1 bis 50 nm aufweisen und Teilchen von a) und b) in einer Menge vorhanden sind, die geringer ist als 20 Gew.-% des Gesamtgewichts der Zusammensetzung.

2. Zusammensetzung nach Anspruch 1, wobei die photokatalytischen Teilchen mindestens die Anatas-Form von Titandioxid, die Rutil-Form von von Titandioxid, oder ein Gemisch davon umfassen.

3. Zusammensetzung nach einem der Ansprüche 1 bis 2, wobei die Titandioxid-Teilchen vorwiegend in der Anatas-Kristallform vorliegen.

4. Zusammensetzung nach Anspruch 3, wobei die kristallinen Titandioxid-Teilchen eine durchschnittliche Größe von 1 bis 50 nm, insbesondere von 2 bis 30 nm, noch spezieller von 5 bis 20 mn aufweisen.

5. Zusammensetzung nach einem der Ansprüche 1 is 4, wobei die photokatalytischen Teilchen eine spezifische Oberfläche pro Gramm von größer als 30 m²/g aufweisen.

6. Zusammensetzung nach einem der Ansprüche 1 is 5, wobei die photokatalytischen Teilchen in einer Menge von 0,1 bis 15 %, vorzugsweise von 1 bis 12 %, und besonders bevorzugt von 2 bis 10 Gew.-% (ausgedrückt in Trockenmasse) des Gesamtgewicht der Zusammensetzung vorhanden sind.

7. Zusammensetzung nach einem der Ansprüche 1 bis 6, wobei die HNO₃-entfernenden Teilchen basische Verbindungen einschließen.

8. Zusammensetzung nach Anspruch 7, wobei die HNO₃-entfernenden Teilchen Calciumcarbonat, Zinkcarbonat oder ein Gemisch davon umfassen.

9. Zusammensetzung nach Anspruch 8, wobei die HNO₃-entfernenden Teilchen in einer Menge von 0,05 bis 15 % insbesondere von 0,1 bis 1 Gew.-% des Gesamtgewichts der Zusammensetzung vorhanden sind.

10. Zusammensetzung nach einem der Ansprüche 1 bis 9, wobei sie photokatalytisches Titandixoid und HNO₃-entfernende Teilchen in einem Verhältnis von HNO₃-entfernenden Teilchen/Titandixoid-Teilchen im Bereich von 0,05 bis 1,2, insbesondere von 0,1 bis 1, und noch spezieller von 0,2 bis 0,8 umfasst.

11. Zusammensetzung nach einem der Ansprüche 1 bis 10, wobei das Silicium-basierte Material einen Polysiloxan-Film bereitstellt.

12. Zusammensetzung nach einem der Ansprüche 1 bis 11, wobei das Silicium-basierte Material mindestens ein Polysiloxan-Polymer umfasst.

13. Zusammensetzung nach einem der Ansprüche 1 bis 12, weiterhin umfassend ein Lösungsmittel.

14. Verfahren zur Herstellung einer Oberfläche aus einem Material mit selbstreinigenden Eigenschaften gegenüber atmosphärischen Verunreinigungen, wobei das Verfahren mindestens die folgenden Schritte umfasst:
- Aufbringen einer Zusammensetzung nach einem der Ansprüche 1 is 13 auf die Oberfläche eines Materials, und
- Trockenen oder Härten der Zusammensetzung, um darauf eine transparente Beschichtung zu erhalten.

## Revendications

1. Composition d'élimination de NOₓ pour utilisation en tant que revêtement translucide sur une surface de matériau de construction, comprenant au moins :
a) des particules de dioxyde de titane photocatalytiques ayant au moins une activité dé-NOₓ,
b) des particules ayant une activité dé-HNO₃, et
c) un matériau à base de silicium dans lequel lesdites particules sont dispersées,
dans laquelle lesdites particules photocatalytiques ont une taille cristalline dans la plage de 1 à 50 nm et les particules de a) et b) étant présentes en une quantité inférieure à 20 % en poids du poids total de ladite composition.

2. Composition selon la revendication 1, dans laquelle les particules photocatalytiques comprennent au moins la forme anatase d'oxyde de titane, la forme rutile d'oxyde de titane ou un mélange de celles-ci.

3. Composition selon l'une quelconque des revendications 1 à 2, dans laquelle les particules de dioxyde de titane sont principalement la forme cristalline anatase.

4. Composition selon la revendication 3, dans laquelle les particules de dioxyde de titane cristallin présentent une taille moyenne de 1 à 50 nm, en particulier de 2 à 30 nm, plus particulièrement de 5 à 20 nm.

5. Composition selon l'une quelconque des revendications 1 à 4, dans laquelle les particules photocatalytiques ont une surface par gramme supérieure à 30 m²/g.

6. Composition selon l'une quelconque des revendications 1 à 5, dans laquelle les particules photocatalytiques sont présentes en une quantité de 0,1 à 15 %, de préférence de 1 à 12 %, et de manière préférée entre toutes de 2 à 10 % en poids (exprimée en matière sèche) du poids total de ladite composition.

7. Composition selon l'une quelconque des revendications 1 à 6, dans laquelle les particules dé-HNO₃ comprennent des composés basiques.

8. Composition selon la revendication 7, dans laquelle les particules dé-HNO₃ comprennent du carbonate de calcium, le carbonate de zinc ou un mélange de ceux-ci.

9. Composition selon la revendication 7, dans laquelle les particules dé-HNO₃ sont présentes en une quantité de 0,05 à 15 %, en particulier de 0,1 à 1 % en poids du poids total de ladite composition.

10. Composition selon l'une quelconque des revendications 1 à 9, comprenant des particules de dioxyde de dioxyde de titane photocatalytique et dé-HNO₃ dans un rapport de particules dé-HNO₃/dioxyde de titane dans la plage de 0,05 à 1,2, en particulier de 0,1 à 1, et plus particulièrement de 0,2 à 0,8.

11. Composition selon l'une quelconque des revendications 1 à 10, dans laquelle le matériau à base de silicium produit un film de polysiloxane.

12. Composition selon l'une quelconque des revendications 1 à 11, dans laquelle le matériau à base de silicium comprend au moins un polymère de polysiloxane.

13. Composition selon l'une quelconque des revendications 1 à 12 comprenant en outre un solvant.

14. Procédé pour préparer une surface d'un matériau ayant des propriétés autonettoyantes vis-à-vis de contaminants atmosphériques, ledit procédé comprenant au moins les étapes de :
- application d'une composition selon l'une quelconque des revendications 1 à 13 sur la surface d'un matériau, et
- séchage ou durcissement de la composition pour obtenir un revêtement translucide sur celle-ci.
